# EUROPÄISCHE PATENTANMELDUNG

(11) **EP 2 607 442 A1**
(43) Veröffentlichungstag der Anmeldung: **26.06.2013**
(21) Anmeldenummer: 11194299.1
(22) Anmeldetag: 19.12.2011
(51) Int. Cl.: C09J 11/06, C09J 151/06

(54) **Reaktiver Polyolefin-Schmelzklebstoff mit niedriger Viskosität und dessen Verwendung für Textilkaschierungen**

(71) Anmelder: Sika Technology AG, 6340 Baar (CH)
(72) Erfinder: Janke, Doreen, 25486 Alveslohe (DE); Cordes, Matthias, 22525 Hamburg (DE)
(74) Vertreter: Sika Patent Attorneys

(57) **Zusammenfassung**

Die vorliegende Erfindung betrifft Schmelzklebstoffzusammensetzungen, welche mindestens ein thermoplastisches, bei 25°C festes Silangruppen enthaltendes Poly-α-olefin, mindestens ein Weichharz mit einem Schmelzpunkt oder Erweichungspunkt zwischen -10 und 40°C sowie mindestens ein bei 25°C flüssiges Silan aufweisen. Diese Schmelzklebstoffzusammensetzungen zeichnen sich durch eine im Vergleich zum Stand der Technik verbesserte Offenzeit und verminderte Viskosität aus, die sich mit anderen niedermolekularen Bestandteilen, die üblicherweise für die Verminderung der Viskosität zugesetzt werden, nicht erzielen lassen, da diese mit der Zeit aus der Klebstoffformulierung entweichen. Die erfindungsgemäßen Schmelzklebstoffe eignen sich insbesondere als Kaschierklebstoffe und weisen während der Applikation eine wünschenswert niedrige Viskosität auf, während durch den Zusatz an bei Raumtemperatur flüssigem Silan eine gute Vernetzungsdichte erzielt werden kann. Trotz der verlängerten Offenzeit, bauen die Schmelzklebstoffzusammensetzungen schnell eine äußerst hohe Frühfestigkeit auf und führen zu einem wärmestabilen Klebeverbund.

## Beschreibung

### Stand der Technik

Schmelzklebstoffe zur Verwendung als Kaschierklebstoffe sind seit Langem bekannt. Wenn der geschmolzene Klebstoff in einer dünnen Schicht auf ein Trägermaterial aufgetragen wird, besteht jedoch häufig das Problem, dass diese Klebstoffe eine geringe Offenzeit aufweisen, was dazu führt, dass der aufgetragene Klebstoff zu schnell abkühlt und sich dabei verfestigt. Dadurch kann der Klebstoff die Oberfläche des Fügepartners nicht mehr benetzen, so dass sich kein Klebeverbund mehr ausbilden kann. Dieser Effekt stellt insbesondere bei Schmelzklebstoffen ein Problem dar, welche auf amorphen thermoplastischen Polymeren basieren. Ein weiterer Nachteil dieser Art von Schmelzklebstoffen besteht darin, dass die Klebstoffe auch nach der Applikation thermoplastisch bleiben. Beim Erhitzen eines Klebeverbunds auf Basis solcher Klebstoffe kann der Klebstoff daher wieder aufschmelzen und der Verbund bei Belastung zerstört werden.

Ein weiterer Nachteil bekannter thermoplastischer Schmelzklebstoffe besteht darin, dass sie im ausgehärteten Zustand sehr hart (d.h. nicht biegsam oder geschmeidig) sind, was ihrer Anwendung für Textilkaschierungen, insbesondere im Bekleidungsbereich, entgegensteht. Bei textilen Anwendungen wird vom Verwender ein *"soft touch"* gewünscht, d.h. der Klebstoff soll möglichst nicht spürbar sein. Zudem erfordern insbesondere Schmelzklebstoffe auf Basis von Polyolefinen eine hohe Aufschmelztemperatur, so dass sich solche Klebstoffe nicht für hitzeempfindliche Materialien wie beispielweise dünne Polyurethanmembranen im Textilbereich eignen. Schließlich besteht bei Textilanwendungen im Bekleidungsbereich das Problem, dass die Textilien häufig gewaschen werden müssen, so dass die Klebstoffe einen hohen Wärmestand aufweisen müssen um den Belastungen von Waschvorgängen standhalten zu können. Diese Probleme werden im Stand der Technik mit reaktiven Schmelzklebstoffen gelöst, bei denen während der Abkühlphase des Klebstoffs eine Vernetzung des aufgeschmolzenen Klebstoffs erfolgt und so dem Schmelzklebstoff duroplastische Eigenschaften verliehen werden. Stand der Technik für Textilverklebungen sind niedrigviskose Polyurethan-Schmelzklebstoffe, die nach dem Auftragen mit Feuchtigkeit aus der Umgebung reagieren und vernetzen und somit wärmestabile Verklebungen bilden. Diese Klebstoffe sind selbst bei 25 °C weich und flexibel genug und besitzen einen sehr niedrigen Schmelzpunkt, was die Applikation auf hitzeempfindliche Substrate ermöglicht. Ein Problem dieser Klebstoffe besteht jedoch, dass sie unmittelbar nach der Applikation äußerst weich sind und ihre Festigkeit erst über einen längeren Zeitraum bilden. Reaktive Polyurethan-Schmelzklebstoffe weisen daher, insbesondere wenn sie in dünnen Schichten aufgetragen werden, eine lange Offenzeit auf, haben aber eine nur geringe Anfangsfestigkeit. Darüber hinaus haben solche Klebstoffe häufig Restmonomerengehalte an Isocyanat von mehr als 1%, so dass sie nach den derzeitgen Kennzeichnungsregeln mit R40 (Verdacht auf krebserregende Wirkung) gekennzeichnet werden müssen.

Eine weitere Klasse reaktiver Schmelzklebstoffe basiert auf silangepfropften Poly-α-olefinen, wie sie beispielsweise in der US 5,994,474 oder in der DE 40 00 695 A1 beschrieben sind. Diese Schmelzklebstoffe ermöglichen eine hohe Festigkeit bei großer Wärmestabilität und verfügen ebenfalls über eine sehr hohe Anfangsfestigkeit. Problematisch ist jedoch die nur sehr kurze Offenzeit, was ihrer Verwendung als Kaschierklebstoffe ohne eine zwischenzeitliche Reaktivierung (d.h. Wiederaufschmelzung) entgegensteht. Weiterhin weisen solche Schmelzklebstoffe eine zu hohe Viskosität auf, so dass sie für Textilkaschierungen, insbesondere im Bekleidungsbereich, nicht geeignet sind.

Zur Verbesserung der Eigenschaften von silangepfropften Poly-α-olefinen, insbesondere zur Verlängerung der Offenzeit und/oder Verminderung der Viskosität ist es möglich, Zusatzstoffe, wie Öle oder Butadiene zusetzen. Allerdings vermindern diese Komponenten die Vernetzungsdichte der Klebstoffe, was in einem niedrigeren Wärmestand resultiert. Dies führt dazu, dass eine ausreichende und dauerhafte Waschbeständigkeit von Textilien nicht mehr gewährleistet werden kann. Ein weiteres Problem viskositätsmindernden Zusatzstoffe besteht darin, dass sie mit der Zeit aus dem Klebstoff freigesetzt werden. Dies stellt insbesondere bei der Verklebung von Baumwolle ein Problem dar.

Ein weiterer Ansatz zur Verbesserung der Offenzeit wird in der EP 2 113 545 A1 beschrieben, die den Zusatz eines niedermolekularen Weichharzes zu silangepfropften Poly-α-olefinen offenbart. Nachteil dieser Verbindung ist es aber, dass auch diese bei der Aushärtung des Klebstoffs nicht in das sich bildende Netzwerk eingebunden wird und mit der Zeit aus dem Klebstoff freigesetzt werden kann. Das zusätzliche Weichharz muss darüber hinaus in relativ großen Mengen im Bereich von 20 bis 40 Gew.-% zugesetzt werden.

### Darstellung der Erfindung

Daher besteht ein Bedarf an reaktiven Schmelzklebstoffzusammensetzungen, die einerseits keine kennzeichnungspflichtigen Inhaltsstoffe, wie beispielsweise monomere Isocyanate, enthalten, und andererseits über eine geringe Viskosität verfügen, eine lange offene Zeit aufweisen und Produkte mit hohem Wärmestand und insbesondere einer dauerhaften Waschbeständigkeit liefern.

Dieses Problem wird überraschenderweise durch eine Schmelzklebstoffzusammensetzung nach Anspruch 1 gelöst, die a) mindestens ein thermoplastisches, bei 25°C festes Silangruppen enthaltendes Poly-α-olefin (P), b) mindestens ein Weichharz (WH) mit einem Schmelzpunkt oder Erweichungspunkt zwischen - 10°C und 40°C; und c) mindestens ein bei 25°C flüssiges Silan umfasst.

Mit der erfindungsgemäßen Schmelzklebstoffzusammensetzung ist zum einen eine Verminderung der Viskosität vor der Verarbeitung und zum anderen eine längere Offenzeit verbunden. Das flüssige Silan wird während der Aushärtung der Zusammensetzung in das polymere Netzwerk eingebunden und kann daher nicht über die Lebenszeit eines hergestellten Produkts aus dem Klebeverbund entweichen. Darüber hinaus verfügt die erfindungsgemäße Schmelzklebstoffzusammensetzung über die gleichen vorteilhaften Eigenschaften, wie Zusammensetzungen ohne das bei 25°C flüssige Silan, d.h. sie weisen ein breites Haftspektrum auf und führen zu hochbelastbaren Verklebungen, welche äußerst wärmestabil sind. Bei Klebeverbünden, welche mit derartigen Schmelzklebstoffzusammensetzungen zusammengefügt werden, kann ein stark reduziertes Kriechverhalten festgestellt werden. Schließlich sind erfindungsgemäße Schmelzklebstoffzusammensetzungen aus arbeitshygienischen und sicherheitsbedingten Aspekten sehr vorteilhaft.

Weitere Aspekte der vorliegenden Erfindung sind die Verwendung der erfindungsgemäßen Schmelzklebstoffzusammensetzung zum Verkleben von Folien, Schäumen oder Textilien und insbesondere zum Verkleben von dünnen Polyurethanmembranen im Textilbereich, zum Verkleben von Glas, insbesondere im Automobilbereich, und zur Herstellung von Sandwichelementen, insbesondere für den Bau und Caravanbereich. Ein weiterer Aspekt der vorliegenden Erfindung ist ein Verbundkörper, umfassend ein erstes Substrat, ein zweites Substrat sowie eine dazwischen aufgebrachte Schicht einer erfindungsgemäßen Schmelzklebstoffzusammensetzung sowie ein Verfahren zur Herstellung eines solchen Verbundkörpers.

### Wege zur Ausführung der Erfindung

In einem ersten Aspekt betrifft die vorliegende Erfindung eine Schmelzklebstoffzusammensetzung, umfassend a) mindestens ein thermoplastisches, bei 25°C festes Silangruppen enthaltendes Poly-α-olefin (P), b) mindesteins ein Weichharz (WH) mit einem Schmelzpunkt oder Erweichungspunkt zwischen - 10°C und 40°C, und c) mindestens ein bei 25°C flüssiges Silan.

Vorzugsweise handelt es sich bei dem thermoplastischen, bei 25°C festen Silangruppen enthaltenden Poly-α-olefin (P) um ein silangepfropftes Poly-α-olefin (P).

Bevorzugt weist das Silangruppen enthaltende Poly-α-olefin (P) eine Erweichungstemperatur zwischen 70°C und 150°C, insbesondere zwischen 80°C und 120°C, und besonders bevorzugt zwischen 90°C und 110°C, auf.

Der Erweichungspunkt wird hierbei mit der Ring & Kugel-Methode in Anlehnung an die DIN EN 1238 gemessen.

Derartige Silangruppen enthaltende Poly-α-olefine (P) sind dem Fachmann bekannt. Sie lassen sich beispielsweise durch Aufpfropfung von ungesättigtem Silan, wie Vinyltrimethoxysilan, auf ein Poly-α-olefin herstellen. Eine detaillierte Beschreibung zur Herstellung von silangepfropften Poly-α-olefinen findet sich beispielsweise in der US 5,994,474 und der DE 40 00 695 A1.

Besonders geeignet als festes Silangruppen enthaltendes Poly-α-olefin (P) ist ein silangepfropftes Polyethylen oder Polypropylen.

Weitere bevorzugte Silangruppen enthaltende Poly-α-olefine (P) sind silangepfropfte Poly-α-olefine, welche mittels Metallocen-Katalysatoren hergestellte Poly-α-olefine sind, auf welche Silangruppen aufgepfropft wurden. Insbesondere handelt es sich um silangepfropfte Polyethylen-Homopolymere oder Polypropylen-Homopolymere.

Der Pfropfungsgrad des silangepfropften Poly-α-olefins (P) beträgt vorteilhafterweise mehr als 1 Gew.-%, insbesondere mehr als 3 Gew.-%, Silan, bezogen auf das Gewicht des Polyolefins. Wird als silangepfropftes Poly-α-olefin (P) ein nach dem Ziegler-Natta-Verfahren hergestelltes silangepfropftes Poly-α-olefin verwendet, so liegt der Propfungsgrad vorzugsweise zwischen 1 und 8 Gew.-%, insbesondere zwischen 1,5 und 5 Gew.-%. Wenn für das silangepfropfte Poly-α-olefin über Metallocen-Katalysatoren hergestellte Poly-α-olefine verwendet werden, liegt der Pfropfungsgrad vorzugsweise zwischen 8 und 12 Gew.-%.

Besonders vorteilhaft ist es, wenn die erfindungsgemäße Schmelzklebstoffzusammensetzung mindestens zwei verschiedene Silangruppen enthaltende Poly-α-olefine (P) umfasst. Besonders bevorzugt ist die Kombination aus silangepfropften Poly-α-olefinen erhältlich nach dem Ziegler-Natta Verfahren und silangepfropften Polypropylen-Homopolymeren erhältlich nach dem Metallocen-Katalysator Verfahren.

In einer bevorzugten Ausführungsform beträgt der Anteil aller Silangruppen enthaltende Poly-α-olefine (P) an der Schmelzklebstoffzusammensetzung mehr als 40 Gew.-%, bevorzugt liegt er zwischen 45 und 75 Gew.-%.

Die erfindungsgemäße Schmelzklebstoffzusammensetzung enthält weiterhin mindestens ein Weichharz (WH) mit einem Schmelzpunkt oder Erweichungspunkt zwischen -10°C und 40°C, vorzugsweise zwischen 0°C und 25°C, und insbesondere zwischen 10°C und 25°C. Aufgrund der Tatsache, dass sich das Weichharz (WH) bei Raumtemperatur (25°C) sehr nahe am Schmelz- oder Erweichungspunkt befindet, ist es bei Raumtemperatur entweder bereits flüssig oder sehr weich. Das Weichharz kann ein natürliches Harz oder ein synthetisches Harz sein.

Insbesondere sind derartige Weichharze (WH) Harze mit mitterem bis höheren Molekulargewicht aus den Klassen der Paraffinharze, Kohlenwasserstoffharze, Polyolefine, Polyester, Polyether, Polyacrylate oder Aminoharze. In einer bevorzugten Ausführungsform ist das Weichharz (WH) ein Kohlenwasserstoffharz, insbesondere ein aliphatisches C₅-C₉-Kohlenwasserstoffharz. Besonders geeignet als Weichharz (WH) hat sich ein aliphatisches C₅-Kohlenwasserstoffharz gezeigt, welches unter dem Handelsnamen Wing-tack^{®}10 von der Firma Cray Valley kommerziell vertrieben wird.

Weitere geeignete Weichharze sind beispielsweise Polyterpenharze, die beispielsweise als Sylvares^{®} TR A25 von Arizona Chemical, USA, kommerziell vertrieben werden, Rosinester und Tallharzester, die beispielsweise als Sylvatac^{®} RE 12, Sylvatac^{®} RE 10, Sylvatac^{®} RE 15, Sylvatac^{®} RE 20, Sylvatac^{®} RE 25 oder Sylvatac^{®} RE 40 von Arizona Chemical, USA, kommerziell vertrieben werden.

Ein weiteres geeignetes Weichharze ist Escorez^{™} 5040 (Exxon Mobil Chemical).

Als Weichharze geeignete Kohlenwasserstoffharze sind beispielsweise Picco A10 (Eastman Kodak) und Regalite R1010 (Eastman Kodak).

Der Anteil der Weichharzkomponente (WH) beträgt vorzugsweise etwa 5 bis 35 Gew.-%, insbesondere etwa 15 bis 25 Gew.-%, bezogen auf das Gesamtgewicht der Schmelzklebstoffzusammensetzung. Darüber hinaus hat es sich als besonders vorteilhaft herausgestellt, wenn das Gewichtsverhältnis der Weichharzkomponente (WH) zu der Komponente aus Silangruppen enthaltenden Poly-α-olefinen (P) kleiner als 0,5 ist. Bevorzugt liegt das Gewichtsverhältnis im Bereich von etwa 0,2 und 0,4 und besonders bevorzugt im Bereich von etwa 0,3 und 0,4.

Das bei 25°C flüssige Silan umfasst Silanverbindungen, in der das Silan mindestens eine Silyl-Alkoxyfunktionalität enthält. Während der Aushärtung der Schmelzklebstoffzusammensetzung hydrolysieren solche Siloxangruppen zunächst unter Freisetzung von Alkoholen zu Silanolen, die unter Abspaltung von Wasser mit weiteren Silanolgruppen in der Schmelzklebstoffzusammensetzung reagieren können. Solche Silanolgruppen entstehen u.a. auch bei der Hydrolyse der Silangruppen im Silangruppen enthaltenden Poly-α-olefin, so dass das bei Raumtemperatur flüssige Silan in der ausgehärteten Zusammensetzung kovalent mit dem Silangruppen enthaltenden Poly-α-olefin verbunden wird.

Das bei 25°C flüssige Silan weist vorzugsweise mindestens zwei mit Silizium verbundene Alkoxyfunktionalitäten auf, da sich dadurch die Vernetzung in der resultierenden ausgehärteten Schmelzklebstoffzusammensetzung erhöhen lässt. Insbesondere weist das bei 25°C flüssige Silan drei mit Silizium verbundene Alkoxyfunktionalitäten auf, was eine besonders effiziente Vernetzung und eine hohe Anfangsfestigkeit des Klebstoffs bewirkt. In einer besonders bevorzugten Ausführungsform handelt es sich bei dem bei 25°C flüssige Silan um ein Alkyltrialkoxysilan, in dem die Alkylgruppe bevorzugt 6 bis 24 Kohlenstoffatome und die Alkoxygruppen bevorzugt jeweils 1 bis 5 Kohlenstoffatome umfassen. In einer ganz besonders bevorzugten Ausführungsform handelt es sich bei dem bei 25°C flüssigen Silan um Hexadecyltrimethoxysilan.

Das bei 25°C flüssige Silan weist ebenfalls vorzugsweise eine möglichst hohe Siedetemperatur auf, damit es beim Erhitzen des Schmelzklebstoffs nicht in die Umgebung freigesetzt wird. Vorzugsweise beträgt die Siedetemperatur des Silans mindestens 130°C, besonders bevorzugt mindestens 150°C und insbesondere mindestens 180°C.

Der Gewichtsanteil des bei 25°C flüssigen Silans beträgt vorzugsweise etwa 3 bis 20 Gew.-%, insbesondere etwa 5 bis 15 Gew.-%, und besonders bevorzugt etwa 6 bis 12 Gew.-%, bezogen auf das Gesamtgewicht der Schmelzklebstoffzusammensetzung.

Es kann vorteilhaft sein, dass die erfindungsgemäße Schmelzklebstoffzusammensetzung neben dem Silangruppen enthaltenden Poly-α-olefin (P) ein zusätzliches bei 25 °C festes thermoplastisches Poly-α-olefin (P') enthält. Bei diesem Polymer kann es sich um ein Homo- oder Copolymer von ungesättigten Monomeren, insbesondere aus der Gruppe umfassend Ethylen, Propylen, Butylen, Isobutylen, Isopren, Vinylacetat bzw. Vinylester mit C3- bis C12-Carbonsäuren und (Meth)acrylat handeln. Besonders bevorzugt sind Ethylenvinylacetat (EVA), ataktische Poly-α-olefine (APAO), insbesondere ein ataktisches oder amorphes Poly-α-olefin (APAO), Polypropylen und Polyethylen. Ganz besonders bevorzugt sind ataktische Poly-α-olefine.

Bevorzugt weisen die festen thermoplastischen Polymere (P') einen Erweichungspunkt von über 90°C, insbesondere zwischen etwa 90 und 130°C, auf.

Das Molekulargewicht Mn liegt vorzugsweise zwischen etwa 7000 und 250000 g/Mol.

Es kann vorteilhaft sein, wenn für die Herstellung der ataktischen Poly-α-olefine (P') Metallocen-Katalysatoren verwendet werden.

Besonders bevorzugt liegt das Gewichtsverhältnis von festen silangruppen enthaltenden Poly-α-olefinen (P) zur festen thermoplastischen PolymerKomponente (P') im Bereich von 1:1 bis 20:1. Als besonders vorteilhaft hat sich ein Anteil an festem thermoplastischem Polymer (P') von etwa 5 bis 35 Gew.-%, insbesondere von etwa 10 bis 20 Gew.-%, bezogen auf das Gesamtgewicht der Schmelzklebstoffzusammensetzungen, erwiesen.

Die erfindungsgemäße Schmelzklebstoffzusammensetzung enthält weiterhin bevorzugt mindestens einen Katalysator, welcher die Reaktion von Silangruppen katalysiert, insbesondere einen Phosphorsäureester oder eine Zinnorganische Verbindung, bevorzugt Dibutylzinnlaurat (DBTL). Der Katalysator ist zweckmäßig in einer Menge von mehr als 0,05 Gew.-%, insbesondere in einer Menge im Bereich von etwa 0,1 bis 1 Gew.-%, in der Schmelzklebstoffzusammensetzung enthalten.

Darüber hinaus können in der erfindungsgemäßen Schmelzklebstoffzusammensetzung weitere Hilfs- und Zusatzstoffe, insbesondere solche, die ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel, enthalten sein.

Es hat sich gezeigt, dass es besonders vorteilhaft ist, wenn die Gewichtssumme aller thermoplastischen, bei 25°C festen Silangruppen enthaltenden Poly-α-olefine (P) und aller Weichharze (WH) und aller gegebenenfalls vorhandenen festen thermoplastischen Polymere (P') mehr als etwa 80 Gew.-%, bevorzugt mehr als etwa 90 Gew.-%, der Schmelzklebstoffzusammensetzung, ausmacht.

Als besonders vorteilhaft haben sich Schmelzklebstoffzusammensetzungen erwiesen, welche im Wesentlichen aus einem thermoplastischem, bei 25°C festen Silangruppen enthaltenden Poly-α-olefin (P), Weichharz (WH), mindestens einem bei 25°C flüssigen Silan, gegebenenfalls festem thermoplastischem Polymer (P'), sowie Katalysator, welcher die Reaktion von Silangruppen katalysiert, bestehen.

Wie vorstehend beschrieben, reagieren die Silangruppen in dem Silangruppen enthaltenden Poly-α-olefin (P) sowie in dem bei 25°C flüssigen Silan bei Kontakt mit Wasser zu Silanolgruppen, die in der Folge mit weiteren Silanolgruppen unter Abspaltung von Wasser zu Siloxangruppen (-Si-O-Si-) reagieren und eine Vernetzung der Schmelzklebstoffzusammensetzungen bewirken. Es ist deshalb zweckmäßig, zur Herstellung der erfindungsgemäßen Schmelzklebstoffzusammensetzung Rohstoffe zu verwenden, die möglichst gut getrocknet sind, und die Klebstoffe während der Herstellung, Lagerung und Applikation möglichst vor Kontakt mit Wasser oder Luftfeuchtigkeit zu schützen. Allerdings verbessert der Zusatz von bei 25°C flüssigen Silanen die Empfindlichkeit des Schmelzklebstoffs gegenüber Wasser, da durch die Reaktion des Silans mit Wasser zunächst keine Vernetzung des Silangruppen enthaltenden Poly-α-olefins einhergeht.

Grundsätzlich erfolgt die Herstellung auf übliche, dem Fachmann für Schmelzklebstoffe bekannte Art und Weise.

Die erfindungsgemäßen Schmelzklebstoffzusammensetzungen werden verflüssigt, indem die thermoplastischen Inhaltsstoffe aufgeschmolzen werden. Dabei sollte die Viskosität der Schmelzklebstoffzusammensetzungen der Applikationstemperatur angepasst sein. Typischerweise liegt die Applikationstemperatur bei der der Klebstoff in einer gut verarbeitbaren Form vorliegt im Bereich von 90 bis 200°C. Die Viskosität beträgt in diesem Temperaturbereich etwa 1500 bis 50000 mPa.s. Ist die Viskosität wesentlich höher, dann ist die Applikation schwierig, während wenn die Viskosität wesentlich niedriger als 1500 mPa.s., der Klebstoff so dünnflüssig ist, dass er beim Auftragen von der zu verklebenden Werkstoffoberfläche abläuft, bevor er sich aufgrund des Abkühlens verfestigt.

Ein besonderer Vorteil der erfindungsgemäßen Schmelzklebstoffzusammensetzung besteht darin, dass sie auch bei niedrigen Applikationstemperaturen eine hinlängliche Viskosität aufweist, die ein Auftragen erlaubt. So ist es bevorzugt, dass die erfindungsgemäße Schmelzklebstoffzusammensetzung bei Temperaturen im Bereich von etwa 90 bis 130°C, insbesondere im Bereich von etwa 100 bis 110°C, verarbeitet wird.

Das durch die Abkühlung erfolgende Erstarren und Verfestigen des Schmelzklebstoffes bewirkt einen schnellen Festigkeitsaufbau und hohe Anfangshaftfestigkeit eines Klebverbundes. Bei der Verwendung eines Klebstoffes ist darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig bzw. zumindest noch klebrig und verformbar ist. Zusätzlich zu dieser physikalischen Art der Verfestigung wird die Schmelzklebstoffzusammensetzung auch nach dem Erkalten durch den Einfluss von Wasser, insbesondere von Luftfeuchtigkeit, innerhalb einer Zeitspanne von typischerweise wenigen Stunden oder Tagen weitervernetzen und an mechanischer Festigkeit gewinnen. Im Gegensatz zu den nicht reaktiven Schmelzklebstoffzusammensetzungen lassen sich reaktive Schmelzklebstoffzusammensetzungen nicht reversibel erhitzen und dadurch wieder verflüssigen. Somit ist der Einsatz derartiger Schmelzklebstoffzusammensetzungen insbesondere für Anwendungen vorteilhaft, in denen der verklebte Verbundkörper im Laufe seines Gebrauches bzw. Lebens in Kontakt mit hohen Temperaturen kommt, da die Verklebung bei solchen Temperaturen keinen Schaden nimmt. Ebenso ist der Einsatz von derartigen Schmelzklebstoffen dahingehend vorteilhaft, dass diese durch die Vernetzung bedingt, bedeutend weniger kriechen.

Ein weiterer Aspekt der Erfindung betrifft einen Verbundkörper, umfassend ein erstes Substrat (S1), welches Glas, Kunststoff, Holz, eine Folie, ein Schaumstoff oder ein Textil, bevorzugt ein Textil, umfasst, eine Schmelzklebstoffzusammensetzung wie vorstehend beschrieben oder eine durch den Einfluss von Wasser vernetzte Schmelzklebstoffzusammensetzung wie vorstehend beschrieben sowie ein zweites Substrat (S2), wobei die Schmelzklebstoffzusammensetzung oder die vernetzte Schmelzklebstoffzusammensetzung zwischen dem ersten Substrat (S1) und dem zweiten Substrat (S2) angeordnet ist.

Als Folie werden insbesondere biegsame flächige Folien aus Polyolefinen in einer Dicke von 0,05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunneln, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien werden üblicherweise durch Streichen, Gießen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass Polyolefin-Folien weitere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Ruß, und Farbstoffe enthalten können. Das heißt, es werden auch derartige Folien als Polyolefin-Folien bezeichnet, welche nicht zu 100% aus Polyolefinen bestehen.

Das zweite Substrat (S2), vielfach auch als Träger bezeichnet, kann von verschiedener Art und Natur sein. Die Substrate können beispielsweise aus Kunststoff, insbesondere Polyolefin oder ABS, Metall, lackiertem Metall, Holz, Holzwerkstoffen, Glas oder Fasermaterialien sein. Das Substrat ist vorzugsweise ein fester, geformter Körper.

Insbesondere handelt es sich beim zweiten Substrat (S2) um ein Fasermaterial, insbesondere ein Naturfasermaterial. Alternativ dazu ist es bevorzugt, wenn das zweite Substrat ein Polyurethan, insbesondere eine Polyurethanmembran ist. In einer weiteren bevorzugten Ausführungsform handelt es sich bei dem zweiten Substrat (S2) um ein Polypropylen.

Bei Bedarf kann die Oberfläche des zweiten Substrats (S2) vorbehandelt werden, so insbesondere durch Reinigen oder Aufbringen eines Primers. Es ist jedoch bevorzugt, dass kein Primer auf das zweite Substrat aufgebracht wird. Der beschriebene Verbundkörper ist vorzugsweise ein Artikel der industriellen Fertigung, insbesondere ein Textilartikel. Alternativ kann es sich bei dem Artikel auch um einen Glasartikel, insbesondere für Automobilanwendungen handeln. In Glasartikeln sorgt der hohe Anteil an Silanen für eine dauerhafte Verklebung. In einer weiteren Ausführungsform handelt es sich bei dem Artikel um ein Sandwichelement, insbesondere für den Bau- oder Caravanbereich. Solche Sandwichelemente bestehen in der Regel aus mehreren Schichten aus Kunststoffen, wie beispielsweise ABS oder PVC, einem Schaum, wie XPS oder EPS, oder aus Holzschichten.

Ein weiterer Aspekt der vorliegenden Erfindung ist ein Verfahren zur Herstellung eines Verbundwerkstoffs, wie er vorstehend beschrieben wurde. Dieses Verfahren umfasst die Schritte (i) Aufschmelzen der erfindungsgemäßen Schmelzklebstoffzusammensetzung wie vorstehend beschrieben, (ii) Applizieren der geschmolzenen Schmelzklebstoffzusammensetzung auf ein erstes Substrat (S1), welches Glas, Kunststoff, Holz, eine Folie, ein Schaumstoff oder ein Textil, bevorzugt ein Textil, umfasst, (iii) gegebenenfalls Erwärmen des ersten Substrats (S1), (iv) Kontaktieren des zweiten Substrats (S2), bevorzugt einer Polyurethanmembran, mit der aufgeschmolzenen Schmelzklebstoffzusammensetzung.

Durch das Erhitzen der Folie (S1) wird diese weich und kann sich der Geometrie des Trägers anpassen, ohne dass Falten entstehen.

Bei den hier benutzten Polyolefin-Folien kann es sich um Dekorfolien handeln, die eine Oberflächenstruktur aufweisen. Diese Oberflächenstruktur kann beispielsweise vor oder während oder nach dem Verkleben eingeprägt werden.

Besonders vorteilhaft hierbei ist es, dass die Klebstoffzusammensetzung direkt auf die Polyolefin-Folie appliziert werden kann und nicht auf den Träger, wie dies zum Beispiel bei Polyurethandispersionsklebstoffen der Fall ist.

Somit erfolgt der Schritt des Kontaktierens insbesondere unter einem Anpressdruck, insbesondere zwischen 0,1 bar und 1 bar, bevorzugt mindestens 0,8 bar, (entsprechend einem Anlegen eines Vakuums von bis zu 0,9 bar, bevorzugt von mindestens 0,2 bar).

Der Anpressdruck erfolgt vorzugsweise durch ein Anlegen eines Unterdruckes im Raum zwischen dem zweitem Substrat (S2) und der Polyolefin-Folie (S1). Der oben erwähnte Anpressdruck kommt deshalb insbesondere durch ein Anlegen eines Unterdruckes von bis zu 0,9 bar, bevorzugt von mindestens 0,2 bar, zustande. Bei Textilverklebungen ist hingegen das Anlegen eines Unterdrucks nicht erforderlich, da hier das beschichtete und das aufzukaschierende Substrat vorzugsweise mit einer Kalanderwalze miteinander verpresst werden.

Der Schritt des Kontaktierens erfolgt vorzugsweise bei einer Schmelzklebstofftemperatur von 50°C oder mehr, insbesondere bei einer Temperatur zwischen etwa 50 und 200°C, besonders bevorzugt zwischen etwa 90 und 120°C.

Beim Presskaschierungsverfahren wird die aufgeschmolzene Schmelzklebstoffzusammensetzung entweder auf den Träger und/oder die Oberfläche des Schaumstoffs oder Textils aufgetragen. Die Verklebung des Trägers mit dem Schaumstoff oder Textil erfolgt allenfalls unter Wärmeeinfluss durch Fügen und Pressen.

Die erfindungsgemäße Schmelzklebstoffzusammensetzung zeichnet sich zum einen durch die Abwesenheit von Isocyanaten aus, was bezüglich der Arbeitshygiene und Sicherheit Vorteile mit sich bringt. Darüber hinaus weist sie auch bei niedrigen Applikationstemperaturen, wie von etwa 100 bis 110°C, eine zum Auftragen geeignete Viskosität auf, was ihre Anwendung insbesondere bei der Verklebung hitzeempfindlicher Substrate, wie beispielsweise Polyurethanmembranen, erlaubt.

Darüber hinaus weist die erfindungsgemäße Schmelzklebstoffzusammensetzung trotz eines durchschnittlich im Vergleich zur EP 2 113 545 geringeren Anteils an Weichharz eine verlängerte Offenzeit auf, was ein im Stand der Technik vielfach notwendiges "Reaktivieren" oder Wiederaufschmelzen des Klebstoffs vor dem Zusammenfügen der Oberfläche des Fügepartners überflüssig macht. Dies führt zu einem stark vereinfachten Klebeprozess, wodurch die erfindungsgemäße Schmelzklebstoffzusammensetzung auch aus finanziellen Aspekten vorteilhaft ist.

Die erfindungsgemäße Schmelzklebstoffzusammensetzung ist äußerst lagerstabil und verfügt über besondere Verarbeitungseigenschaften, insbesondere im Applikationstemperaturbereich von etwa 0°C bis 130°C. Bei diesen Temperaturen ist die erfindungsgemäße Schmelzklebstoffzusammensetzung auch über längere Zeit viskositätsstabil. Die erfindungsgemäße Schmelzklebstoffzusammensetzung ist darüber hinaus geruchsfrei und auch bei dickschichtigen Anwendungen blasenfrei und schnell zu verarbeiten und zeichnet sich durch eine gute Haftung und gute Beständigkeit gegenüber Umwelteinflüssen, insbesondere gegenüber Waschprozessen von beispielsweise Textilien aus.

Im Folgenden wird die Erfindung durch ein Beispiel illustriert.

### Beispiele

Es wurde eine Schmelzklebstoffzusammensetzung hergestellt, indem die Ausgangsstoffe gemäß den in Tabelle 1 angegebenen Gewichtsanteilen bei einer Temperatur von 150°C und unter Inertgasatmosphäre in einem Rührwerk vermengt wurden.

**Tabelle 1: Schmelzklebstoffzusammensetzung**

| | **1** |
|---|---|
| **P1** | 49,5 Gew. % |
| **P2** | 7,6 Gew. % |
| **P3** | 15,2 Gew. % |
| Wingtack^{®} 10 | 19,0 Gew. % |
| Hexadecyltrimethoxysilan | 8,4 Gew. % |
| Phosphatester auf Basis von langkettigen Alkoholen | 0,33 Gew. % |
| Offenzeit (sec) | 230 sec |
| Viskosität* bei 110°C (Pa.s) | 8500 |
| Viskosität* bei 130°C (Pa.s) | 4100 |
| Frühfestigkeitsaufbau σₘₐₓ (3 min) [N/mm²] | 0,01 |
| Frühfestigkeitsaufbau σₘₐₓ (6 min) [N/mm²] | 0,03 |
| Frühfestigkeitsaufbau σₘₐₓ (10 min) [N/mm²] | 0,12 |
| Frühfestigkeitsaufbau σₘₐₓ (20 min) [N/mm²] | 0,16 |
| Frühfestigkeitsaufbau σₘₐₓ (30 min) [N/mm²] | 0,17 |
| Bruchdehnung [%] | 122 |
| Zugfestigkeit [N/mm²] | 0,8 |

| | |
|---|---|
| * Viskosität bei 2,5 upm | |

Die eingesetzten Polymere finden sich in Tabelle 2.

**Tabelle 2: Verwendete Polymere**

| | |
|---|---|
| **P1** | Silangepfropftes Poly-α-olefin, |
| | Molekulargewicht (Mn): 10600 g/mol, |
| | Schmelzviskosität (190°C, DIN 53 019): 5000 mPa.s, |
| | Erweichungstemperatur (Ring & Kugel): 98°C |
| **P2** | Silangepfropftes Poly(propylen/ethylen) (Poly)-α-olefin) (durch Metallo- |
| | cen-Katalyse erhalten) |
| | Schmelzviskosität (170°C DIN 53 018): ca. 100 mPa.s, |
| | Erweichungstemperatur (Ring & Kugel): 100°C |
| | Tropfpunkt: ca. 80°C |
| | Dichte: ca. 0,90 g/cm³ |
| | Silangehalt: ca. 10 Gew.-% (Pfropfungsmittel: Vinyltriethoxysilan) |
| **P3** | Amorphes Poly-α-olefin (butenreich) |
| | Schmelzviskosität (170°C) |
| | 6000 bis 10000 cp |
| | Dichte 0,90 g/cm³ |
| | Erweichungstemperatur (Ring & Kugel): 114 bis 122 °C |
| | Tg: -27°C |

## Patentansprüche

1. Schmelzklebstoffzusammensetzung, umfassend
a) mindestens ein thermoplastisches, bei 25°C festes Silangruppen enthaltendes Poly-α-olefin (P);
b) mindesteins ein Weichharz (WH) mit einem Schmelzpunkt oder Erweichungspunkt zwischen -10°C und 40°C; und
c) mindestens ein bei 25°C flüssiges Silan.

2. Schmelzklebstoffzusammensetzung gemäß Anspruch 1, **dadurch gekennzeichnet, dass** das bei 25°C feste Silangruppen enthaltende Poly-α-olefin (P) eine Erweichungstemperatur zwischen 70 und 150°C, insbesondere zwischen 80 und 120°C, und besonders bevorzugt zwischen 90 und 110°C, aufweist.

3. Schmelzklebstoffzusammensetzung gemäß Anspruch 1 oder 2, **dadurch gekennzeichnet, dass** das bei 25°C feste Silangruppen enthaltende Poly-α-olefin (P) ein silangepfropftes Poly-α-olefin (P), vorzugsweise ein silangepfropftes Polyethylen oder Polypropylen, ist.

4. Schmelzklebstoffzusammensetzung gemäß einem der vorhergehenden Ansprüche, **dadurch gekennzeichnet, dass** das bei 25°C feste Silangruppen enthaltende Poly-α-olefin (P) ein mittels Metallocen-Katalysatoren hergestelltes Poly-α-olefin ist, auf welches Silangruppen aufgepfropft wurden.

5. Schmelzklebstoffzusammensetzung gemäß einem der vorhergehenden Ansprüche, **dadurch gekennzeichnet, dass** die Zusammensetzung mindestens zwei verschiedene feste Silangruppen enthaltende Poly-α-olefine (P) aufweist.

6. Schmelzklebstoffzusammensetzung gemäß einem der vorhergehenden Ansprüche, **dadurch gekennzeichnet, dass** das Weichharz (WH) einen Schmelzpunkt oder Erweichungspunkt zwischen 0 und 25°C, insbesondere zwischen 10 und 25°C, aufweist.

7. Schmelzklebstoffzusammensetzung gemäß einem der vorhergehenden Ansprüche, **dadurch gekennzeichnet, dass** das Weichharz (WH) ein Kohlenwasserstoffharz, insbesondere ein aliphatisches C₅-C₉-Kohlenwasserstoffharz, ist.

8. Schmelzklebstoffzusammensetzung gemäß einem der vorhergehenden Ansprüche, **dadurch gekennzeichnet, dass** die Menge an Weichharz (WH) 10 bis 40 Gew.-%, insbesondere 15 bis 25 Gew.-%, bezogen auf die Schmelzklebstoffzusammensetzung, beträgt.

9. Schmelzklebstoffzusammensetzung gemäß einem der vorhergehenden Ansprüche, **dadurch gekennzeichnet, dass** das Gewichtsverhältnis aller Weichharze (WH) zu allen bei 25°C festen Silangruppen enthaltenden Poly-α-olefinen (P) kleiner als 0,5 ist, bevorzugt zwischen 0,2 und 0,4 und am meisten bevorzugt zwischen 0,3 und 0,4 liegt.

10. Schmelzklebstoffzusammensetzung gemäß einem der vorhergehenden Ansprüche, **dadurch gekennzeichnet, dass** es sich bei dem bei 25°C flüssigen Silan um ein Alkyltrialkoxysilan, in dem die Alkylgruppe bevorzugt 6 bis 24 Kohlenstoffatome und die Alkoxygruppen bevorzugt jeweils 1 bis 5 Kohlenstoffatome umfassen, bevorzugt um Hexadecyltrimethoxysilan, handelt.

11. Schmelzklebstoffzusammensetzung gemäß einem der vorhergehenden Ansprüche, **dadurch gekennzeichnet, dass** die Menge an dem bei 25°C flüssigen Silan 5 bis 15 Gew.-%, insbesondere 6 bis 12 Gew.-%, bezogen auf die Schmelzklebstoffzusammensetzung, beträgt.

12. Schmelzklebstoffzusammensetzung gemäß einem der vorhergehenden Ansprüche, **dadurch gekennzeichnet, dass** die Zusammensetzung weiterhin ein bei 25°C festes thermoplastisches Poly-α-olefin (P'), insbesondere ein ataktisches Poly-α-olefin (APAO) ohne Silangruppen enthält.

13. Verwendung einer Schmelzklebstoffzusammensetzung gemäß einem der Ansprüche 1 bis 12 zum Verkleben von Folien, insbesondere Polyolefinfolien, Schäumen oder Textilien, insbesondere als Kaschierklebstoff.

14. Verbundkörper (1), umfassend
- ein erstes Substrat (S1), welches Glas, Kunststoff, Holz, eine Folie, ein Schaumstoff oder ein Textil, bevorzugt ein Textil, umfasst,
- eine Schmelzklebstoffzusammensetzung gemäß einem der Ansprüche 1 bis 12 oder eine durch den Einfluss von Wasser vernetzte Schmelzklebstoffzusammensetzung gemäß einem der Ansprüche 1 bis 12 sowie
- ein zweites Substrat (S2),
wobei die Schmelzklebstoffzusammensetzung oder die vernetzte Schmelzklebstoffzusammensetzung zwischen dem ersten Substrat (S1) und dem zweiten Substrat (S2) angeordnet ist.

15. Verbundkörper gemäß Anspruch 14, **dadurch gekennzeichnet, dass** das zweite Substrat (S2) ein Fasermaterial, insbesondere ein Naturfasermaterial, oder eine Polyurethanmembran ist.

16. Verbundkörper gemäß Anspruch 15, **dadurch gekennzeichnet, dass** das zweite Substrat (S2) ein Polypropylen ist.

17. Verfahren zur Herstellung eines Verbundkörpers gemäß einem der Ansprüche 14 bis 16, umfassend die Schritte:
(i) Aufschmelzen einer Schmelzklebstoffzusammensetzung gemäß einem der Ansprüche 1 bis 12,
(ii) Applizieren der geschmolzenen Schmelzklebstoffzusammensetzung auf ein erstes Substrat (S1), welches Glas, Kunststoff, Holz, eine Folie, ein Schaumstoff oder ein Textil, bevorzugt ein Textil, umfasst,
(iii) gegebenenfalls Erwärmen des ersten Substrats (S1),
(iv) Kontaktieren des zweiten Substrats (S2), bevorzugt einer Polyurethanmembran, mit der aufgeschmolzenen Schmelzklebstoffzusammensetzung.

18. Verfahren gemäß Anspruch 17, **dadurch gekennzeichnet, dass** der Schritt des Kontaktierens unter einem Anpressdruck, insbesondere zwischen 0,1 bar und 1 bar, bevorzugt mindestens 0,8 bar, erfolgt.
